Europäisches Patentamt

European Patent Office

Office européen des brevets

(19)

(11) Veröffentlichungsnummer : **0 171 618**
**B1**

(12) ## EUROPÄISCHE PATENTSCHRIFT

(45) Veröffentlichungstag der Patentschrift :
07.09.88

(51) Int. Cl.⁴ : **G 01 B 9/02**

(21) Anmeldenummer : 85108750.2

(22) Anmeldetag : 12.07.85

(54) Einrichtung mit einem abgedichteten evakuierten Hohlkörper.

(30) Priorität : 11.08.84 DE 3429646

(43) Veröffentlichungstag der Anmeldung :
19.02.86 Patentblatt 86/08

(45) Bekanntmachung des Hinweises auf die Patenterteilung : 07.09.88 Patentblatt 88/36

(84) Benannte Vertragsstaaten :
AT CH DE FR GB IT LI NL SE

(56) Entgegenhaltungen :
DE-B- 2 460 406

(73) Patentinhaber : **Dr. Johannes Heidenhain GmbH**
**Nansenstrasse 17**
**D-8225 Traunreut (DE)**

(72) Erfinder : **Dangschat, Holmer, Dipl.-Ing.**
**Heinz-von-Stein-Strasse 25**
**D-8225 Traunreut (DE)**

EP 0 171 618 B1

## Beschreibung

Die Erfindung betrifft eine interferometrische Meßeinrichtung mit einem abgedichteten evakuierten Hohlkörper gemäß dem oberbegriff des Anspruchs 1.

Eine derartige Einrichtung mit einem abgedichteten evakuierten Hohlkörper wird beispielsweise bei Laserinterferometern verwendet. Ein solches Laserinterferometer wird allgemein zur Längenmessung und insbesondere zur Kalibrierung von inkrementalen Längenmeßeinrichtungen eingesetzt.

Aus der DE-PS 2 421 371 ist eine interferometrische Längenmeßeinrichtung zur Messung der Relativlage zweier Objekte mit einem längs einer Meßstrekke beweglichen, mit dem einen zu messenden objekt verbundenen Bauteil in Form eines Reflektors bekannt. Das bewegliche Bauteil mitsamt der Meßstrekke ist zur Abschirmung gegen Umwelteinflüsse in einen evakuierten Hohlkörper eingebracht, der zwecks Durchführung eines Mitnehmers für den Reflektor einen in Meßrichtung. verlaufenden Längsschlitz aufweist, der mittels zweier dachförmig angeordneter Dichtlippen verschlossen ist, durch die der schwertförmige Mitnehmer hindurchgreift. Da bei der Meßbewegung des Mitnehmers eine geringfügige Spaltbildung zwischen dem Mitnehmer und den Dichtlippen auftreten kann, werden zur Aufrechterhaltung des Vakuums im Hohlkörper die Dichtlippen mit einer Dichtflüssigkeit, vorzugsweise Vakuumöl, zur hermetischen Abdichtung überschichtet. Die durch die feinen Spalte zwischen den Dichtlippen und dem Mitnehmer in den evakuierten Innenraum des Hohlkörpers eindringende Dichtflüssigkeit wird in einer Sammelrinne am Boden des Hohlkörpers gesammelt und mittels einer Pumpe an die Dichtlippen zurückgefördert.

Die außerhalb des evakuierten Innenraums des Hohlkörpers über den Dichtlippen befindliche Dichtflüssigkeit ist dem normalen Luftdruck ausgesetzt und weist eine in Abhängigkeit von diesem Luftdruck in Lösung befindliche spezifische Gasmenge auf. Die in den evakuierten Innenraum des Hohlkörpers durch die feinen Spalte eindringende Dichtflüssigkeit ist plötzlich dem Vakuum ausgesetzt, wodurch die in der Dichtflüssigkeit gelöste Gasmenge schlagartig freigesetzt wird. Dieses schlagartige Freisetzen des gelösten Gases hat eine Blasen — oder Schaumbildung der Dichtflüssigkeit zur Folge, die die vom Meßstrahl des Laserinterferometers durchsetzte Meßstrecke beeinträchtigen und den Reflektor verunreinigen kann, so daß Meßungenauigkeiten auftreten können.

Der Erfindung liegt die Aufgabe zugrunde, bei einer Einrichtung der genannten Gattung eine derartige Blasen — oder Schaumbildung der in den evakuierten Innenraum des Hohlkörpers eindringenden Dichtflüssigkeit zu verhindern.

Diese Aufgabe wird erfindungsgemäß durch die Merkmale des Anspruchs 1 gelöst.

Die mit der Erfindung erzielten Vorteile bestehen insbesondere darin, daß mit einfachen Mitteln eine Schaum- oder Blasenbildung der in den Innenraum des evakuierten Hohlkörpers eindringenden Dichtflüssigkeit wirksam verhindert wird, da die eindringende Dichtflüssigkeit im Innenraum nicht dem Vakuum selbst, sondern dem hydrostatischen Druck einer im unteren Teil des Innenraumes befindlichen Flüssigkeitssäule ausgesetzt ist. Die in der eintretenden Dichtflüssigkeit gelöste spezifische Gasmenge wird durch Diffusion langsam bis an den Flüssigkeitsspiegel der im Innenraum befindlichen Flüssigkeitssäule gelangen, dort ohne Blasen- oder Schaumbildung in das Vakuum eintreten und von der mit dem evakuierten oberen Teil des Hohlkörpers verbundenen Vakuumpumpe entfernt werden, so daß keine Beeinträchtigung der Meßstrecke und des Reflektors durch Blasen- oder Schaumbildung der eintretenden Dichtflüssigkeit und damit keine Meßungenauigkeiten mehr auftreten können.

Vorteilhafte Ausbildungen der Erfindung entnimmt man den Unteransprüchen.

Ein Ausführungsbeispiel der Erfindung wird anhand der Zeichnung näher erläutert.

Es zeigen

Figur 1 schematisch ein Laserinterferometer

Figur 2 einen Querschnitt nach der Linie 2-2 und

Figur 3 einen Längsschnitt nach der Linie 3-3 des Laserinterferometers nach Figur 1.

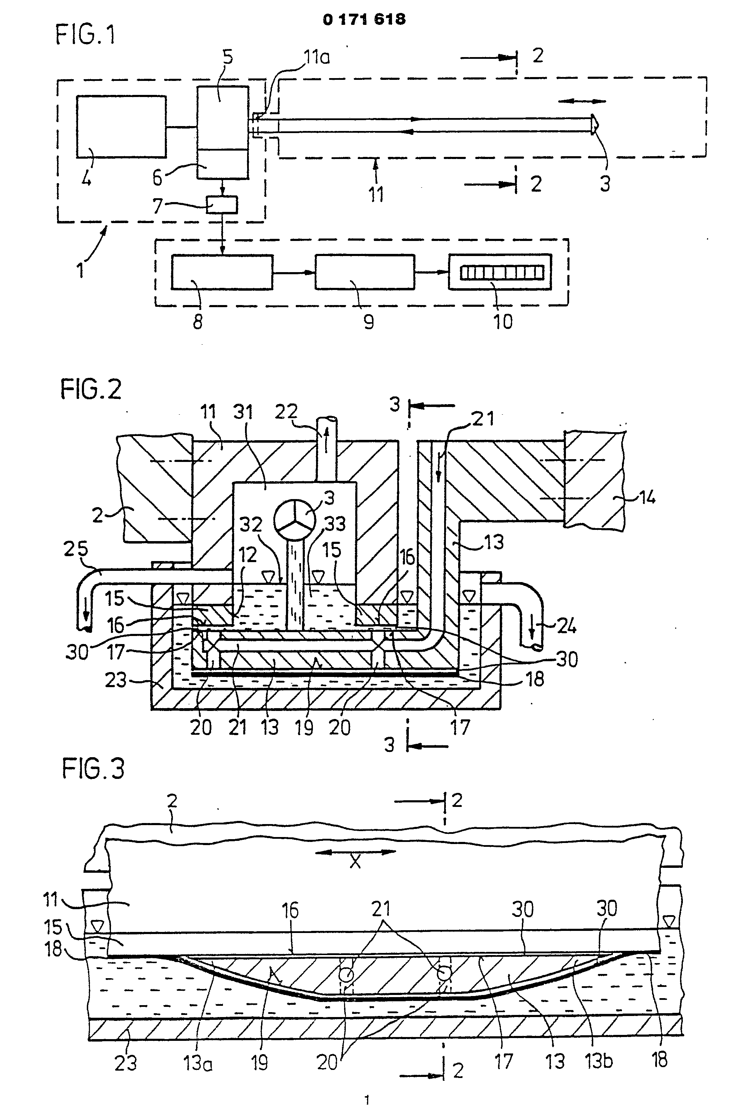

In Figur 1 ist schematisch ein Laserinterferometer 1 bekannter Bauart gezeigt, das an einem ersten zu messenden Objekt 2 befestigt ist und im Zusammenwirken mit einem beweglichen Bauteil 3 die Messung von Längen gestattet. Die Lichtquelle des Interferometers 1 besteht aus einem frequenzstabilisierten Laser 4. Eine Baueinheit 5 enthält die Interferometeroptik, die den Laserstrahl durch einen Strahlenteiler in einen Meßstrahl und in einen Bezugsstrahl aufspaltet. Der Meßstrahl und der Bezugsstrahl werden an einem Strahlenvereiniger wieder vereinigt und ergeben Interferenzerscheinungen, die von der Differenz der optischen Weglängen des Meßstrahls und des Bezugsstrahls abhängig sind. Durch Verschieben des beweglichen Bauteils 3 in Form eines Reflektors verändert sich die optische Weglänge des Meßstrahls, so daß sich in Abhängigkeit hiervon die Interferenzerscheinungen und die daraus auf photoelektrischem Wege abgeleiteten Signale ändern. Die Photodetektoren zur Umwandlung der optischen Signale in elektrische Signale befinden sich in einer Baueinheit 6 und die Verstärker und Trigger für die Aufbereitung der elektrischen Signale in einer Baueinheit 7. Die Anzahl der bei einer Verschiebung des Reflektors 3 durchlaufenen Signalperioden werden von einem Vorwärts-/Rückwärtszähler 8 gezählt. In einem nachgeschalteten Rechner 9 erfolgt die Umrechnung der gemessenen Verschiebung in Dezimalwerte ; das Meßergebnis wird mittels einer Anzeigeeinheit 10 in digitaler Form angezeigt. Die Meßstrecke ist bei diesem Interferometer 1 ins Vakuum gelegt. Der Meßstrahl gelangt durch ein Fenster 11a in einen evakuierten Hohlkörper 11 und wird vom Reflektor 3 wieder durch dieses Fenster 11a reflektiert. Die vorstehend beschriebene Interferometereinrichtung ist in ihren Einzelheiten nicht Gegenstand der Erfindung und daher auch nicht näher erläutert. Diese Interferometereinrichtung kann in beliebiger Weise aufgebaut sein.

In Figur 2 ist das Laserinterferometer nach Figur 1 in einem Querschnitt nach der Linie 2-2 und in Figur 3 in einem Längsschnitt nach der Linie 3-3 dargestellt. Die Abschirmung der Meßstrecke sowie des beweglichen Bauteils 3 in Form des Reflektors erfolgt durch den längserstreckten Hohlkörper 11, der am ersten zu messenden objekt 2 in beliebiger Weise befestigt ist. Der Hohlkörper 11 mit einem im Querschnitt U-förmigen Profil weist einen in Meßrichtung X verlaufenden Längsschlitz 12 auf, durch den ein Mitnehmer 13 hindurchgreift, der den Reflektor 3 mit einem zweiten zu messenden objekt 14 verbindet. Das erste zu messende objekt 2 kann durch das Bett einer nicht gezeigten Werkzeugmaschine und das zweite zu messende Objekt 14 durch einen Schlitten gebildet sein.

Der U-förmige Hohlkörper 11 weist an den Enden der beiden nach unten gerichteten Schenkel je eine längserstreckte Magnetleiste 15 mit einer ebenen Führungsfläche 16 auf, die jeweils mit einer ebenen Führungsfläche 17 des sich quer über das U-förmige Profil des Hohlkörpers 11 erstreckenden Mitnehmers 13 korrespondiert. Der gesamte Längsschlitz 12 des Hohlkörpers 11 ist mit einer flexiblen Metallfolie 18 abgedeckt, die sich im Bereich des Mitnehmers 13 über eine Gleitfläche 19 des Mitnehmers 13 erstreckt. Außerhalb des Mitnehmers 13 wird die flexible Metallfolie 18 von den beiden Magnetleisten 15 des Hohlkörpers 11 zur Abdichtung des Längsschlitzes 12 auf den beiden Führungsflächen 16 für den Mitnehmer 13 gehalten. Wie aus Figur 3 ersichtlich, verjüngen sich in Meßrichtung X die beiden Enden 13a, 13b des Mitnehmers 13, so daß bei der Meßbewegung des Mitnehmers 13 in Meßrichtung X die flexible Metallfolie 18 von den Magnetleisten 15 ohne nennenswerte Spaltbildung abgehoben wird und über die Gleitfläche 19 des Mitnehmers 13 gleitet.

Zur hermetischen Abdichtung des Innenraumes 31 des evakuierten Hohlkörpers 11 mit der Meßstrecke für den Meßstrahl und mit dem Reflektor 3 sind in den beiden Führungsflächen 17 und in der Gleitfläche 19 des Mitnehmers 13 Bohrungen 20 vorgesehen, die jeweils über eine Leitung 21 im Mitnehmer 13 mit einer einen Überdruck aufweisenden Dichtflüssigkeit 30, vorzugsweise Vakuumöl, versorgt werden. Zwischen den Führungsflächen 16 der Magnetleisten 15 und den Führungsflächen 17 des Mitnehmers 13 einerseits und der flexiblen Metallfolie 18 und der Gleitfläche 19 des Mitnehmers 13 andererseits befindet sich somit eine tragende Ölschicht 30, die einmal einen mechanischen Kontakt zwischen den Führungsflächen 16, 17 sowie der Gleitfläche 19 des Mitnehmers 13 und der Metallfolie 18 verhindert, so daß zwischen dem Mitnehmer 13 und den Magnetleisten 15 sowie der flexiblen Metallfolie 18 keine Reibungskräfte auftreten können, die zu einer Deformation des Mitnehmers 13 in Meßrichtung X bei der Meßbewegung führen und Meßungenauigkeiten nach sich ziehen können. Zum anderen bewirkt diese Ölschicht 30 aus Drucköl eine vollkommen hermetische Abdichtung des Innenraums 31 des evakuierten Hohlkörpers 11 gegen Umwelteinflüsse, da bei einem Laserinterferometer sich die der Messung zugrundeliegende Wellenlänge in Abhängigkeit von atmosphärischen Einflüssen (Luftdruck, Temperatur, Feuchtigkeit, $CO_2$-Gehalt) ändert.

Der obere Teil des Innenraumes 31 des Hohlkörpers 11 wird über eine Vakuumleitung 22 evakuiert; eine ständige Nachevakuierung dieses Innenraums 31 ist wegen der hermetischen Abdichtung durch die Dichtflüssigkeit 30 nicht erforderlich. Der untere Teil des Innenraumes (31) ist mit der nach innen dringenden Dichtflüssigkeit bis zu einer bestimmten Höhe gefüllt, sodaß eine Flüssigkeitssäule (33) entstecht. Die zwischen den Führungsflächen 16 der Magnetleisten 15 und den Führungsflächen 17 sowie zwischen der Gleitfläche 19 des Mitnehmers 13 und der flexiblen Metallfolie 18 nach außen austretende Dichtflüssigkeit 30 wird in einer längserstreckten Ölwanne 23 mit einer Überlaufleitung 24 aufgefangen.

Infolge der nach unten gerichteten Schenkel des Hohlkörpers 11 tritt die zwischen den Führungsflächen 16 der Magnetleisten 15 und den Führungsflächen 17 des Mitnehmers 13 in den Innenraum 31 des Hohlkörpers 11 eindringende Dichtflüssigkeit 30 unterhalb des Flüssigkeitsspiegels 32 der im unteren Teil des Innenraums 31 befindlichen Flüssigkeitssäule 33 ein. Da diese in den Innenraum 31 des Hohlkörpers 11 eintretende Dichtflüssigkeit 30 somit nicht dem Vakuum selbst im oberen Teil des Innenraumes 31, sondern dem hydrostatischen Druck der im unteren Teil des evakuierten Innenraums 31 befindlichen Flüssigkeitssäule 33 ausgesetzt ist, wird die in der eintretenden Dichtflüssigkeit 30 gelöste spezifische Gasmenge durch Diffusion langsam bis an den Flüssigkeitsspiegel 32 der im unteren Teil des Innenraums 31 befindlichen Flüssigkeitssäule 33 gelangen, dort ohne Blasen- oder Schaumbildung in das Vakuum in oberen Teil des Innenraums 31 eintreten und von einer nicht gezeigten Vakuumpumpe über die Vakuumleitung 22 aus dem Innenraum 31 des Hohlkörpers 11 entfernt werden, so daß keine Beeinträchtigung der Meßstrecke und des Reflektors 3 durch Blasen- oder Schaumbildung der eintretenden Dichtflüssigkeit 30 und damit keine Meßungenauigkeiten auftreten können. Die im unteren Teil des Innenraums 31 befindliche Flüssigkeitssäule 33 wird durch die eingedrungene Dichtflüssigkeit 30 gebildet, die über eine evakuierte Überlaufleitung 25 wieder abfliessen kann; diese evakuierte Überlaufleitung 25 ist so angeordnet, daß die Flüssigkeitssäule 33 stets eine bestimmte vorgegebene Höhe im Innenraum 31 aufweist.

## Patentansprüche

1. Interferometrische Meßeinrichtung mit einem evakuierten Hohlkörper (11) zur Abschirmung einer Meßstrecke und eines längs dieser Meßstrecke beweglichen Reflektors (3), bei der der Hohlkörper einen in Meßrichtung X verlaufenden Längsschlitz (12) zwecks Durchführung eines Mitnehmers (13) für den Reflektor (3) aufweist und bei der der Längsschlitz (12) durch eine strömende Dichtflüssigkeit hermetisch abgedichtet ist, dadurch gekennzeichnet, daß der untere Teil des Innenraums (31) des evakuierten Hohlkörpers (11) mit Flüssigkeit bis zu einer bestimmten Höhe gefüllt ist, sodaß eine Flüssigkeitssäule (33) entsteht, daß der über der Flüssigkeitssäule (33) liegende obere Teil des Innenraumes (31) evakuiert ist, daß sämtliche der Durchführung des Mitnehmers (13) im Längsschlitz (12) dienenden Öffnungen unterhalb des Flüssigkeitsspiegels (32) der Flüssigkeitssäule (33) liegen und daß die strömende Dichtflüssigkeit (30) unterhalb des Flüssigkeitsspiegels (32) der Flüssigkeitssäule (33) in den unteren Teil des Innenraums (31) des Hohlkörpers (11) eintritt.

2. Meßeinrichtung nach Anspruch 1, dadurch gekennzeichnet, daß der Längsschlitz (12) des Hohlkörpers (11) durch eine flexible Folie (18) abgedichtet ist, die über den Mitnehmer (13) gleitet, und daß zur Abdichtung des Längsschlitzes (12) im Bereich des Mitnehmers (13) sich zwischen dem Hohlkörper (11) und dem Mitnehmer (13) sowie zwischen der flexiblen Folie (18) und dem Mitnehmer (13) die strömende Dichtflüssigkeit (30) befindet.

3. Meßeinrichtung nach Anspruch 2, dadurch gekennzeichnet, daß der Mitnehmer (13) Führungsflächen (17), die mit Führungsflächen (16) des Hohlkörpers (11) korrespondieren, sowie eine Gleitfläche (19) aufweist, über die die flexible Folie (18) gleitet, und daß sich jeweils die Dichtflüssigkeit (30) zwischen den Führungsflächen (16) des Hohlkörpers (11) und den Führungsflächen (17) des Mitnehmers (13) sowie zwischen der Gleitfläche (19) des Mitnehmers (13) und der flexiblen Folie (18) befindet.

4. Meßeinrichtung nach Anspruch 3, dadurch gekennzeichnet, daß die Führungsflächen (17) und die Gleitfläche (19) des Mitnehmers (13) Bohrungen (20) aufweisen, die zur Zuführung der Dichtflüssigkeit (30) mit einer Leitung (21) verbunden sind.

5. Meßeinrichtung nach Anspruch 1, dadurch gekennzeichnet, daß die Dichtflüssigkeit (30) einen Überdruck gegenüber dem Umgebungsdruck aufweist.

6. Meßeinrichtung nach Anspruch 1, dadurch gekennzeichnet, daß die Dichtflüssigkeit (30) aus Vakuumöl besteht.

7. Meßeinrichtung nach Anspruch 2, dadurch gekennzeichnet, daß die flexible Folie (18) aus Metall besteht und im Bereich des Längsschlitzes (12) durch am Hohlkörper (11) angebrachte Magnetleisten (15) gehalten ist.

8. Meßeinrichtung nach Anspruch 1, dadurch gekennzeichnet, daß der Hohlkörper (11) ein im Querschnitt U-förmiges Profil aufweist, dessen den Längsschlitz (12) begrenzende Schenkel nach unten gerichtet sind.

9. Meßeinrichtung nach den Ansprüchen 3, 7 und 8, dadurch gekennzeichnet, daß die Magnetleisten (15) an den Enden der Schenkel des Hohlprofils (11) befestigt sind und die Führungsflächen (16) für den Mitnehmer (13) aufweisen.

## Claims

1. Interferometric measuring device with an evacuated hollow body (11) for shielding a measuring path and a reflector (3) movable along this measuring path, in which the hollow body comprises a longitudinal slot (12) running in the measuring direction X for the passage of a carrier (13) for the reflector (3) and in which the longitudinal slot (12) is hermetically sealed by a flowing sealing fluid, characterised in that the lower part of the inner space (31) of the evacuated hollow body (11) is filled with fluid up to a predetermined height, so that a fluid column (33) results, in that the upper part of the inner space (31) lying above the fluid column (33) is evacuated, in that the whole of the openings serving as the passage of the carrier (13) in the longitudinal slot (12) lies beneath the meniscus (32) of the fluid, and in that the flowing sealing fluid (30) enters the lower part of the inner space (31) of the hollow body (11) beneath the fluid meniscus (32) of the fluid column (33).

2. Measuring device according to claim 1, characterised in that the longitudinal slot (12) of the hollow body (11) is sealed by a flexible foil (18) which slides over the carrier (13), and in that the flowing sealing fluid (30) is present between the hollow body (11) and the carrier (13) as well as between the flexible foil (18) and the carrier (13) for sealing the longitudinal slot (12) in the region of the carrier (13).

3. Measuring device according to claim 2, characterised in that the carrier (13) comprises guide surfaces (17), which correspond with guide surfaces (16) of the hollow body (11), as well as a sliding surface (19), over which slides the flexible foil (18), and in that the sealing fluid (30) is located both between the guide surfaces (16) of the hollow body (11) and the guide surfaces (17) of the carrier (13) and between the sliding surface (19) of the carrier (13) and the flexible foil (18).

4. Measuring device according to claim 3, characterised in that the guide surfaces (17) and the sliding surface (19) of the carrier (13) have bores (20) which are connected to a duct (21) for the supply of the sealing fluid (30).

5. Measuring device according to claim 1, characterised in that the sealing fluid (30) has an excess pressure relative to the ambient pressure.

6. Measuring device according to claim 1, characterised in that the sealing fluid (30) consists of vacuum oil.

7. Measuring device according to claim 2, characterised in that the flexible foil (18) consists of metal and is held in the region of the longitudinal slot (12) by magnetic strips (15) fitted to the hollow body (11).

8. Measuring device according to claim 1, characterised in that the hollow body (11) has a U-shaped profile in cross section, whereof the flanges bounding the longitudinal slot (12) are downwardly directed.

9. Measuring device according to claims 3, 7 and 8, characterised in that the magnetic strips (15) are fixed on the ends of the flanges of the hollow profile (11) and comprise the guide surfaces (16) for the carrier (13).

## Revendications

1. Dispositif de mesure interférométrique, avec un corps creux (11) mis sous vide pour encapsuler à la fois une piste de mesure et un réflecteur (3) mobile le long de cette dernière, dans lequel le corps creux présente une fente longitudinale (12) en direction de mesure X pour le passage d'un organe (13) d'entraînement du réflecteur (3) et ladite fente longitudinale est bouchée hermétiquement par un liquide d'étanchéité en écoulement, caractérisé par le fait que la partie basse du volume intérieur (31) du corps creux sous vide (11) est emplie de liquide jusqu'à un niveau déterminé d'où il résulte une colonne de liquide (33), que la partie du volume intérieur (31) placée au-dessus de ladite colonne de liquide (33) est mise sous vide, que toutes les ouvertures servant au passage de l'organe d'entraînement (13) dans la fente longitudinale (12) se trouvent au-dessous du niveau de liquide (32) de la colonne (33) et que le liquide d'étanchéité en écoulement (30) entre dans la partie basse du volume intérieur (31) du corps creux (11) au-dessous de ce même niveau de liquide (32) de la colonne (33).

2. Dispositif de mesure selon la revendication 1 caractérisé par le fait que la fente longitudinale (12) du corps creux (11) est bouchée par une feuille flexible (18) qui glisse sur l'organe d'entraînement (13) et que, pour étanchéifier ladite fente longitudinale dans la région de ce même organe d'entraînement (13), le liquide d'étanchéité en écoulement (30) se trouve entre le corps creux (11) et l'organe d'entraînement (13) ainsi qu'entre la feuille flexible (18) et ledit l'organe d'entraînement (13).

3. Dispositif de mesure selon la revendication 2 caractérisé par le fait que l'organe d'entraînement 13 présente des surfaces guides (17) correspondant à des surfaces guides (16) du corps creux (11) ainsi qu'une surface de glissement (19) sur laquelle glisse la feuille flexible (18) et que le liquide d'étanchéité (30) se trouve chaque fois entre les surfaces guides (16) du corps creux (11) et les surfaces guides (17) de l'organe d'entraînement (13) et entre la surface de glissement (19) de l'organe d'entraînement (13) et la feuille flexible (18).

4. Dispositif de mesure selon la revendication 3 caractérisé par le fait que les surfaces guides (17) et la surface de glissement (19) de l'organe de l'entraînement (13) présentent des alésages (20) qui communiquent avec un conduit (21) pour l'amenée du liquide d'étanchéité (30).

5. Dispositif de mesure selon la revendication 1 caractérisé par le fait que le liquide d'étanchéité (30) présente une surpression par rapport à la pression ambiante.

6. Dispositif de mesure selon la revendication 1 caractérisé par le fait que le liquide d'étanchéité (30) est formé d'huile pour vide.

7. Dispositif de mesure selon la revendication 2 caractérisé par le fait que la feuille flexible (18) est faite de métal et maintenue dans la région de la fente longitudinale (12) par des barrettes magnétiques (15) fixées au corps creux (11).

8. Dispositif de mesure selon la revendication 1 caractérisé par le fait que le corps creux (11) présente en section transversale un profil en forme de « U » dont les branches limitant la fente longitudinale (12) sont dirigées vers le bas.

9. Dispositif de mesure selon les revendications 3, 7 et 8 caractérisé par le fait que les barrettes magnétiques (15) sont fixées aux extrémités des branches du profil creux (11) et comportent les surfaces guides (16) pour l'organe d'entraînement (13).

FIG.1

FIG.2

FIG.3